# EUROPÄISCHE PATENTANMELDUNG

(11) **EP 4 354 233 A1**
(43) Veröffentlichungstag der Anmeldung: **17.04.2024**
(21) Anmeldenummer: 22201708.9
(22) Anmeldetag: 14.10.2022
(51) Int. Cl.: G05B 19/042, G05B 19/418

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (14) für eine technische Anlage, insbesondere Fertigungs- oder Prozessanlage, das wenigstens einen Operator Station Server (15) und wenigstens einen mit dem Operator Station Server (15) verbundenen Operator Station Client (16) umfasst, wobei der Operator Station Server (15) dazu ausgebildet ist, Visualisierungsinformationen an den Operator Station Client (16) zu übertragen.

Das Leitsystem (14) ist dadurch gekennzeichnet, dass der Operator Station Server (15) und der Operator Station Client (16) dazu ausgebildet sind, im Zusammenhang mit der weiteren grafischen Repräsentation (8, A, B, C) ein weiteres Anforderungssymbol (10) in der weiteren grafischen Repräsentation (8) des ersten technischen Objekts und/oder des zweiten technischen Objekts bereitzustellen, und bei dem Anwählen des weiteren Anforderungssymbols (10) durch den Operator des Leitsystems (14) die weitere grafische Repräsentation (A, B, c), die einem der technischen Objekte zugeordnet ist, in die weitere grafische Repräsentation (8), die dem anderen der technischen Objekte zugeordnet ist, zu integrieren.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Für die Bedienung und Beobachtung verfahrenstechnischer Anlagen werden symbolische Anlagenbilder erstellt, die die verfahrenstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexe Controls (z.B. Trendanzeigen, Meldefolgeanzeigen, usw.) und Container, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen) zusammen.

Verfahrenstechnische Anlagen sind in der Regel strukturiert nach Anlage, Teilanlage, technische Einrichtung bis hinunter zur Messstelle. Diese Struktur wirkt sich auch auf Gerätestruktur und auf die die Bedienung und Beobachtung aus. Wird ein Alarm in einem verfahrenstechnischen Anlagenteil gemeldet, so trägt er auch dessen Bereichskennung (technologische Pfadangabe).

Auch wenn verfahrenstechnische Anlagen streng strukturiert werden, so hängen sie dennoch physikalisch zusammen - z.B. über Rohrleitungen. Dementsprechend können verfahrenstechnisehe Ereignisse sich nicht nur auf denselben Anlagenteil, sondern auch auf andere Anlagenteile auswirken.

Nach dem Stand der Technik ist es für Operatoren oftmals schwierig, die Auswirkung verfahrenstechnischer Ereignisse auf andere Anlagenteile, oder gar desselben Anlagenteils, zu erkennen oder richtig einzuordnen. Insbesondere die Darstellung verfahrenstechnischer Ereignisse in unterschiedlichen grafischen Repräsentationen (Prozesswerte in Trendanzeigen und Alarme in Meldefolgeanzeigen) erschweren es dem Operator, Zusammenhänge (zwischen verschiedenen Prozessobjekten usw.) zu erkennen oder zu überprüfen.

Damit ein Operator verfahrenstechnisch zusammenhängende Prozessobjekte auch als solche wahrnehmen und in der Bedienung und Beobachtung berücksichtigen kann, können im Engineering so genannte "Faceplate jumps" in den Eigenschaften der Prozessobjekte projektiert werden. Hierbei wird festgelegt, über welches Bedienelement des Faceplate des Prozessobjekts durch einen Sprung das oder die Faceplates anderer Prozessobjekte geöffnet werden können - z.B. von einem Monitor-Prozessobjekt ausgehend weitere Monitor-Prozessobjekte oder Regler-Prozessobjekte.

Die Korrelation beschränkt sich im Stand der Technik auf das (isolierte) Öffnen der Faceplastes der im Engineering via "Faceplate jump" korrelierten Prozessobjekte. Detailliertere Vergleiche und Gegenüberstellungen sind nach dem Stand der Technik nicht möglich.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1 und durch ein Leitsystem mit den Merkmalen des Anspruchs 2. Außerdem wird die Aufgabe gelöst durch eine Verwendung eines Leitsystems zum Betrieb einer technischen Anlage gemäß Anspruch 9. Vorteilhafte Weiterbildungen ergeben sich aus den abhängigen Ansprüchen.

Das Leitsystem für eine technische Anlage, insbesondere Fertigungs- oder Prozessanlage, umfasst wenigstens einen Operator Station Server und wenigstens einen mit dem Operator Station Server verbundenen Operator Station Client, wobei der Operator Station Server dazu ausgebildet ist, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen, wobei der Operator Station Server und der Operator Station Client dazu ausgebildet sind, zur Laufzeit der technischen Anlage eine erste grafische Repräsentation eines ersten technischen Objektes und eine zweite grafische Repräsentation eines zweiten technischen Objektes der technischen Anlage visuell darzustellen, und wobei der Operator Station Server und der Operator Station Client dazu ausgebildet sind, eine weitere grafische Repräsentation des ersten technischen Objektes und eine weitere grafische Repräsentation des zweiten technischen Objektes auf eine jeweilige Anforderung eines Operators des Leitsystems an den Operator Station Client hin visuell darzustellen, wobei die Anforderung jeweils durch ein Anwählen eines Anforderungssymbols in der ersten grafischen Repräsentation und der zweiten grafischen Repräsentation durch den Operator stellbar ist.

Das Leitsystem ist dadurch gekennzeichnet, dass der Operator Station Server und der Operator Station Client dazu ausgebildet sind, im Zusammenhang mit der weiteren grafischen Repräsentation ein weiteres Anforderungssymbol in der weiteren grafischen Repräsentation des ersten technischen Objekts und/oder des zweiten technischen Objekts bereitzustellen, und bei dem Anwählen des weiteren Anforderungssymbols durch den Operator des Leitsystems die weitere grafische Repräsentation, die einem der technischen Objekte zugeordnet ist, in die weitere grafische Repräsentation, die dem anderen der technischen Objekte zugeordnet ist, zu integrieren.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen. Unter einem "Operator Station Server" wird vorliegend ein Server verstanden, der zentral Daten eines Bedien- und Beobachtungssystems sowie in der Regel Alarm- und Messwertarchive des Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln. Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

In an sich bekannter Weise ist das Leitsystem dazu ausgebildet, Informationen für ein Bedienen und Beobachten der technischen Lage visuell darzubieten. Die visuelle/graphische Darbietung kann beispielsweise auf einem Computerbildschirm, einem Tablet oder einem Smartphone erfolgen.

Der Operator Station Server ist im Verbund mit dem Operator Station Client dazu ausgebildet, eine erste grafische Repräsentation eines ersten technischen Objektes und eine zweite grafische Repräsentation eines zweiten technischen Objektes der technischen Anlage zum Bedienen und Beobachten der technischen Objekte visuell darzustellen. Bei den grafischen Repräsentationen handelt es sich um grafische Objekte, die von dem Bildschirm, Smartphone, Tablet oder dgl. visuell dargeboten werden. Sie stellen dem Operator die für ein Bedienen und Beobachten des jeweiligen technischen Objektes notwendigen Informationen und Interaktionsmöglichkeiten zur Verfügung. Die Informationen können beispielsweise aktuelle Zustände, Werte oder Visualisierungen des technischen Objektes sein. Interaktionsmöglichkeiten können beispielsweise Eingaben für Parameter, Aktionsbuttons oder sonstige, im Umfeld von grafischen Mensch-Maschine Schnittstellen gebräuchliche Funktionalitäten sein. Man spricht bei den hier referenzierten grafischen Repräsentationen auch von sogenannten "Faceplates", die dem jeweiligen technischen Objekt zugeordnet sind.

Der Operator Station Server und der Operator Station Client sind zudem dazu ausgebildet, weitere grafische Repräsentationen der technischen Objekte auf eine jeweilige Anforderung eines Operators hin visuell darzustellen. Um die Anforderung auszulösen, kann der Operator ein Anforderungssymbol (einen "Button") anwählen. Es sind aber auch weitere Formen der Anforderungsstellung möglich. Beispielsweise kann der Operator die Anforderung auch über eine Spracheingabe oder eine textliche Eingabe stellen.

Unter dem Begriff "weitere grafische Repräsentation" ist dabei vorliegend die visuelle Darstellung eines, das jeweilige technische Objekt betreffenden Aspekts zu verstehen. Beispielsweise kann auf die Anforderung des Operators hin ein Diagramm als weitere grafische Repräsentation visuell dargestellt werden, welches einen zeitlichen Verlauf eines dem technischen Objekt zugeordneten Messwertes zeigt. Die weitere grafische Repräsentation stellt dabei eine Detailierung oder eine Fokussierung auf einen bestimmten Aspekt der (ersten) grafischen Repräsentation bzw. des Faceplates dar.

Das erfindungsgemäße Leitsystem ist dazu ausgebildet, in den weiteren grafischen Repräsentationen ein weiteres Anforderungssymbol visuell darzustellen. Bei einem Anwählen des weiteren Anforderungssymbols wird die weitere grafische Repräsentation des jeweils anderen technischen Objektes in die "aktive" grafische Repräsentation des technischen Objektes eingefügt. Dabei ist das zweite technische Objekt bzw. die weitere grafische Repräsentation des zweiten technischen Objektes fest vorgegeben. Der Operator muss mit anderen Worten nur "auf den Knopf drücken" und die weitere grafische Repräsentation des zweiten technischen Objektes wird in die weitere grafische Repräsentation des ersten technischen Objektes integriert. Die Referenzierung auf das zweite technische Objekt kann dabei in einem Engineering bzw. einer Projektierung der technischen Anlage erfolgt sein.

Die weiteren grafischen Repräsentationen können, ohne sich hierauf zu beschränken, zeitliche Verläufe von Messwerten, Meldungen, insbesondere Alarmmeldungen, oder Statusinformationen der dazugehörigen technischen Objekte darstellen. Mit einem zeitlichen Verlauf eines Messwertes in einem Verlaufsdiagramm ist dabei eine visuelle Darstellung eines Verlaufs der Messwerte mit einer Zeitbasis gemeint. Das Verlaufsdiagramm zeigt dabei beispielsweise an, dass der erste Messwerte zu einem Zeitpunkt t=5s von einem Startzeitpunkt aus einen Wert von 10 bar aufweist (für den Fall einer Druckgröße als Messwert).

In einem Ausführungsbeispiel hat ein Operator aus der grafischen Repräsentation eines ersten technischen Objektes heraus ein Diagramm eines Messwertes X geöffnet, das dem ersten technischen Objekt zugeordnet ist. Zusätzlich wählt er ein Anforderungssymbol aus, das im Zusammenhang mit dem Diagramm des ersten Messwertes X visuell dargestellt wird. Dadurch wird ein Diagramm eines zweiten Messwertes Y, der einem zweiten technischen Objekt zugeordnet ist, innerhalb des Diagrammes des Messwertes X angezeigt.

Das erfindungsgemäße Leitsystem ermöglicht es, im Engineering (also in einer Projektierungsphase einer technischen Anlage) projektierte Korrelationen zwischen technischen Objekten zu nutzen, um gemeinsame, gegenüberstellende grafische Darstellungen in "Detailansichten" der grafischen Repräsentationen (Faceplates) der technischen Objekte unterstützten zu können.

Die Erfindung ist nicht auf eine Referenzierung zwischen genau zwei technischen Objekten beschränkt. Vielmehr kann durch das Anwählen des weiteren Anforderungssymbols eine Mehrzahl von weiteren grafischen Repräsentationen einer Mehrzahl von weiteren technischen Objekten angefordert werden - zweckmäßig mit einer Darbietung einer Auswahlmöglichkeit für den Operator.

Ein weiteres erfindungsgemäßes Leitsystem für eine technische Anlage, insbesondere Fertigungs- oder Prozessanlage, umfasst wenigstens einen Operator Station Server und wenigstens einen mit dem Operator Station Server verbundenen Operator Station Client, wobei der Operator Station Server dazu ausgebildet ist, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen, wobei der Operator Station Server und der Operator Station Client dazu ausgebildet sind, zur Laufzeit der technischen Anlage eine erste grafische Repräsentation eines ersten technischen Objektes und eine zweite grafische Repräsentation eines zweiten technischen Objektes der technischen Anlage zum Bedienen und Beobachten der technischen Objekte visuell darzustellen, und wobei der Operator Station Server und der Operator Station Client dazu ausgebildet sind, eine weitere grafische Repräsentation des ersten technischen Objektes und eine weitere grafische Repräsentation des zweiten technischen Objektes auf eine jeweilige Anforderung eines Operators des Leitsystems an den Operator Station Client hin visuell darzustellen, wobei die Anforderung durch eine sprachliche oder textliche Eingabe des Operators und/oder durch ein Anwählen eines Anforderungssymbols in der ersten grafischen Repräsentation und der zweiten grafischen Repräsentation stellbar ist.

Im Gegensatz zu dem zuvor erläuterten Leitsystem ist das Leitsystem dadurch gekennzeichnet, dass der Operator Station Server und der Operator Station Client dazu ausgebildet sind, im Zusammenhang mit der visuellen Darbietung der weiteren grafischen Repräsentation des ersten technischen Objektes auf eine sprachliche oder textliche Eingabe des Operators hin die weitere grafische Repräsentation, die einem der technischen Objekte zugeordnet ist, in die weitere grafische Repräsentation, die dem anderen der technischen Objekte zugeordnet ist, zu integrieren. Die beiden Leitsysteme unterscheiden sich demnach nur in der Art, wie der Operator die Anforderung an das Leitsystem stellt, die weiteren grafischen Repräsentationen ineinander zu integrieren. Die damit verbundenen Vorteile sind gleich.

Der Operator kann vorteilhafterweise mithilfe der (ersten) grafischen Repräsentation das dazugehörige technische Objekt zur Laufzeit der technischen Anlage bedienen und beobachten. Die erste grafische Repräsentation stellt dem Operator hierfür beispielsweise einen Status, aktuelle Messwerte oder Schnittstellen des jeweiligen technischen Objektes visuell dar und kann über entsprechende Steuerungswerkzeuge (Schieberegler, Texteingabefelder etc.) verfügen.

Die technischen Objekte (erstes und zweites sowie ggf. weitere) sind bevorzugt Prozessobjekte einer Prozessanlage wie beispielsweise Pumpen, Ventile, Rührer, Heizer etc.

Ganz besonders bevorzugt sind die (ersten und zweiten und ggf. weiteren) technischen Objekte zur Laufzeit der technischen Anlage zusammenwirkend verbunden, insbesondere verfahrenstechnisch zusammenwirkend. Für den Operator kann es besonders hilfreich sein, wenn er zusätzlich zu dem Diagramm eines Messwertes X eines Tanks (als erstem technischen Objekt) auch das Diagramm eines Messwertes Y einer Pumpe (als zweitem technischen Objekt) direkt angezeigt bekommt, wenn die entsprechende Anforderung stellt. Dabei stehen die Pumpe und der Tank in einem verfahrenstechnischen Zusammenhang, da die Pumpe ein Fluid in den oder aus dem Tank pumpt.

Im Rahmen einer bevorzugten Weiterbildung der Erfindung weisen die erste grafische Repräsentation des ersten technischen Objektes und/oder die erste grafische Repräsentation des zweiten technischen Objektes ein Sprungsymbol auf, bei dessen Anwählen durch den Operator des Leitsystems die jeweils andere erste grafische Repräsentation des jeweils anderen, dazugehörigen technischen Objektes visuell dargestellt wird. Zusätzlich zu den Relationen auf der Ebene der weiteren grafischen Repräsentation(en) erzeugt das Leitsystem durch das Sprungsymbol eine weitere Möglichkeit für den Operator, gezielt von der ersten grafischen Repräsentation zur zweiten grafischen Repräsentation zu springen - dabei aber auf einer abstrakteren Ebene. Es kann anstelle oder zusätzlich zu dem Sprungsymbol auch vorgesehen sein, dass die zweite grafische Repräsentation durch eine sprachliche oder textliche Eingabe des Operators dargestellt wird - unter der Voraussetzung, dass die erste grafische Repräsentation zum Zeitpunkt der Eingabe aktiv visuell dargestellt wird.

Besonders bevorzugt ist das Leitsystem dazu ausgebildet, die zur visuellen Darstellung der weiteren grafischen Repräsentationen notwendigen Informationen erst dann zu ermitteln, wenn der Operator die Anforderung an das Leitsystem durch ein Anwählen des Anforderungssymbols oder durch eine sprachliche oder textliche Eingabe stellt. Diese Weiterbildung bringt den Vorteil mit sich, dass das Leitsystem eine ressourcenschonende Bedienung und Beobachtung des Leitsystems ermöglicht, da Informationen erst dann für eine visuelle Darbietung berücksichtigt werden, wenn sie benötigt werden.

Das Leitsystem kann mit einem oder mehreren Automatisierungsgeräten verbunden sein, die dem Operator Station Server den zeitlichen Verlauf eines aus der technischen Anlage stammenden Messwertes und Informationen über Status der technischen Objekte und dergleichen übermitteln.

Die zuvor formulierte Aufgabe wird zudem gelöst durch die Verwendung eines Leitsystems, das wie zuvor erläutert ausgebildet ist, zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: grafische Bedienoberflächen eines Leitsystems einer technischen Anlage gemäß dem Stand der Technik;
- FIG 2: grafische Oberflächen eines erfindungsgemäßen Leit-systems gemäß einem ersten Aspekt;
- FIG 3: grafische Oberflächen eines erfindungsgemäßen Leit-systems gemäß einem zweiten Aspekt;
- FIG 4: grafische Oberflächen eines erfindungsgemäßen Leit-systems gemäß einem dritten Aspekt; und
- FIG 5: ein erfindungsgemäßes Leitsystem in einer schematischen Darstellung.

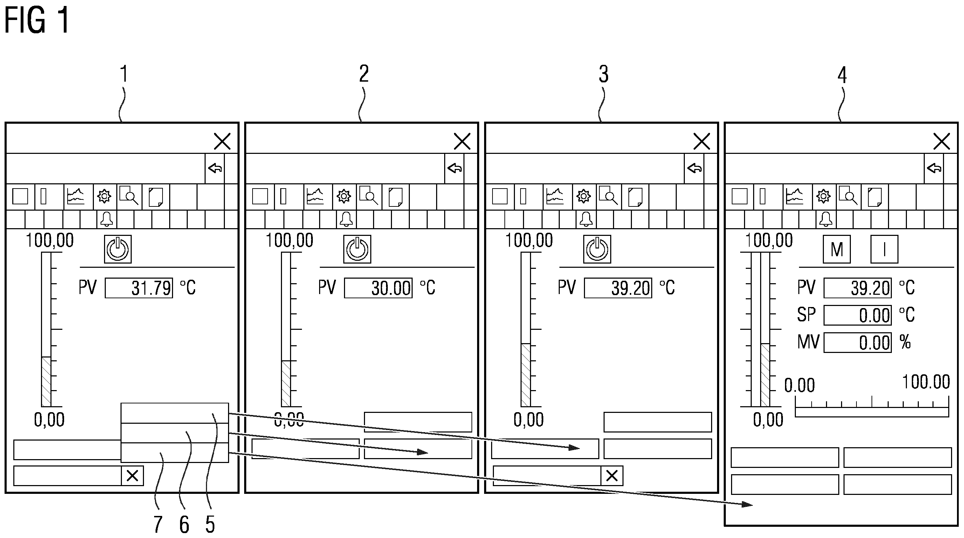

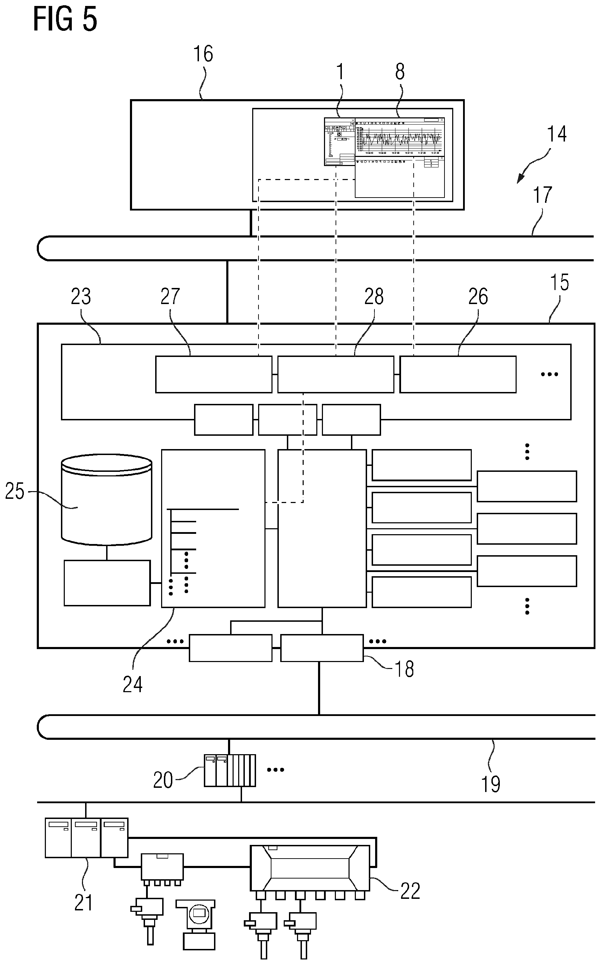

In FIG 1 sind eine erste grafische Repräsentation 1 eines ersten technischen Objektes, eine erste grafische Repräsentation 2 eines zweiten technischen Objektes, eine erste grafische Repräsentation 3 eines dritten technischen Objektes und eine erste grafische Repräsentation 4 eines vierten technischen Objektes dargestellt. Die grafischen Repräsentationen 1, 2, 3, 4 werden von einem Leitsystem erzeugt, das anhand der FIG 5 im späteren Verlauf beschrieben ist. Die grafischen Repräsentationen 1, 2, 3, 4 werden auch als "Faceplates" bezeichnet.

Die grafischen Repräsentationen 1, 2, 3, 4 beziehen sich jeweils auf ein erstes technisches Objekt, ein zweites technisches Objekt, ein drittes technisches Objekt und ein viertes technisches Objekt einer als Prozessanlage ausgebildeten technischen Anlage. Innerhalb der ersten grafischen Repräsentation 1 werden ein erstes Sprungsymbol 5, ein zweites Sprungsymbol 6 und ein drittes Sprungsymbol 7 dargestellt. Wenn ein Operator das erste Sprungsymbol 5 in der ersten grafischen Repräsentation 2 anwählt, wird ihm von dem Leitsystem die von dem ersten Sprungsymbol 5 referenzierte zweite grafische Repräsentation 2 angezeigt. Entsprechend referenzieren das zweite Sprungsymbol 6 die dritte grafische Repräsentation 3 und das dritte Sprungsymbol 7 die vierte grafische Repräsentation 4. Die anderen grafischen Repräsentationen 2, 3, 4 können über entsprechende Sprungsymbole verfügen, um beispielweise "zurückspringen" zu können. Die Verknüpfung zwischen den einzelnen, sich "auf einer Ebene" befindlichen grafischen Repräsentationen 1, 2, 3, 4 (Faceplates) ist in dieser Form Stand der Technik.

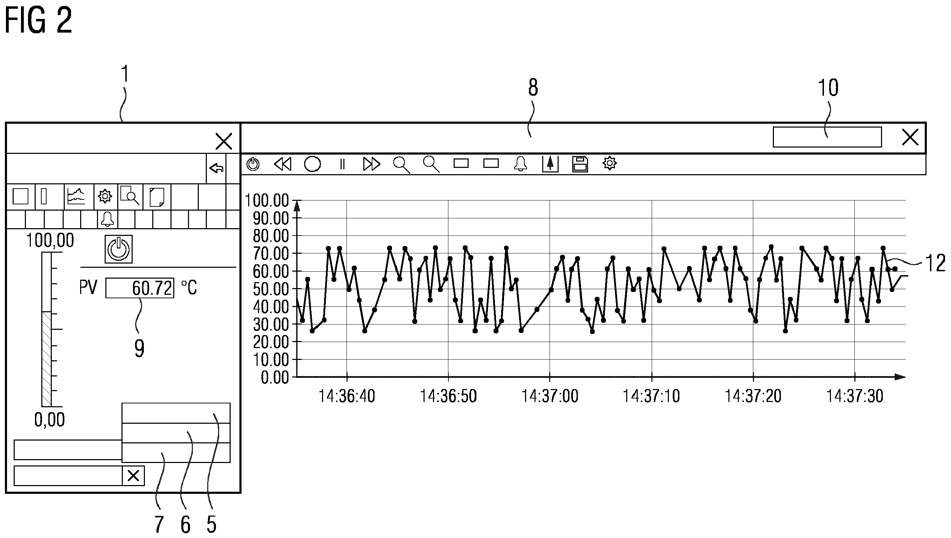

In FIG 2 ist die visuelle Darbietung eines erfindungsgemäßen Leitsystems dargestellt. Rechts neben der ersten grafischen Repräsentation 1 ist eine weitere grafische Repräsentation 8 dargestellt, die zu dem ersten technischen Objekt gehörig ist. Die weitere grafische Repräsentation 6 wird auf eine Anforderung eines Operators hin durch das Leitsystem visuell dargestellt. Hierzu kann der Operator auf einen aktuellen Prozessmesswert 9 "klicken", der Teil der ersten grafischen Repräsentation 1 ist. Es ist dabei wesentlich, dass die weitere grafische Repräsentation 8 eine Detailierung bzw. eine Fokussierung auf einen bestimmten Aspekt der ersten grafischen Repräsentation 1 ist. Es besteht demnach ein hierarchisches Verhältnis zwischen der ersten grafischen Repräsentation 1 und der weiteren grafischen Repräsentation 8. Die weitere grafische Repräsentation 8 kann dabei als der ersten grafischen Repräsentation 1 untergeordnet angesehen werden.

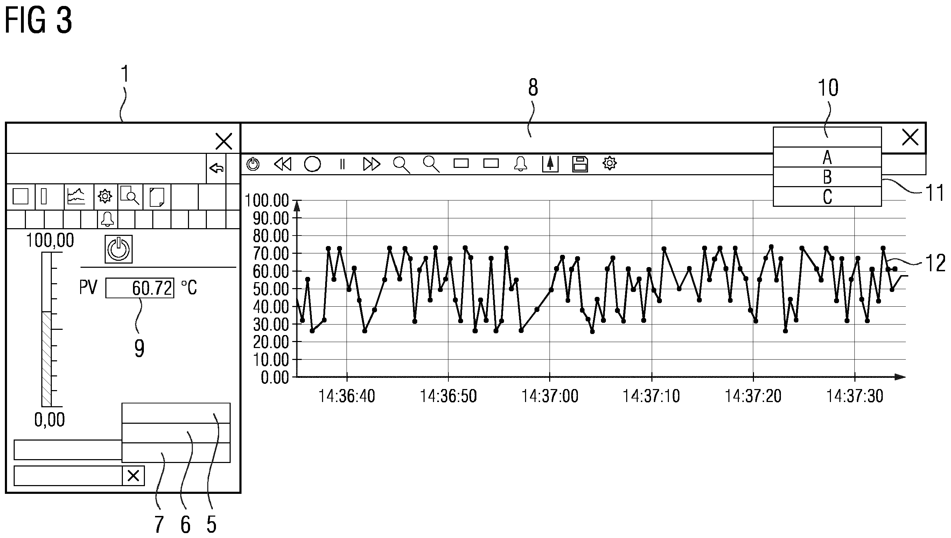

Die weitere grafische Repräsentation 8 zeigt einen zeitlichen Verlauf 12 des Prozessmesswertes, den der Operator in der ersten grafischen Repräsentation 1 für die Detailierung angewählt hat. Innerhalb der weiteren grafischen Repräsentation 8 ist zudem ein Anforderungssymbol 10 dargestellt (in der rechten oberen Ecke). Wenn der Operator das Anforderungssymbol 10 anwählt ("anklickt"), öffnet sich ihm ein Auswahlmenü 11, welches in FIG 3 zu erkennen ist. In dem Auswahlmenü 11 erhält der Operator die Möglichkeit, eine weitere grafische Repräsentation A, eine weitere grafische Repräsentation B oder eine weitere grafische Repräsentation C auszuwählen.

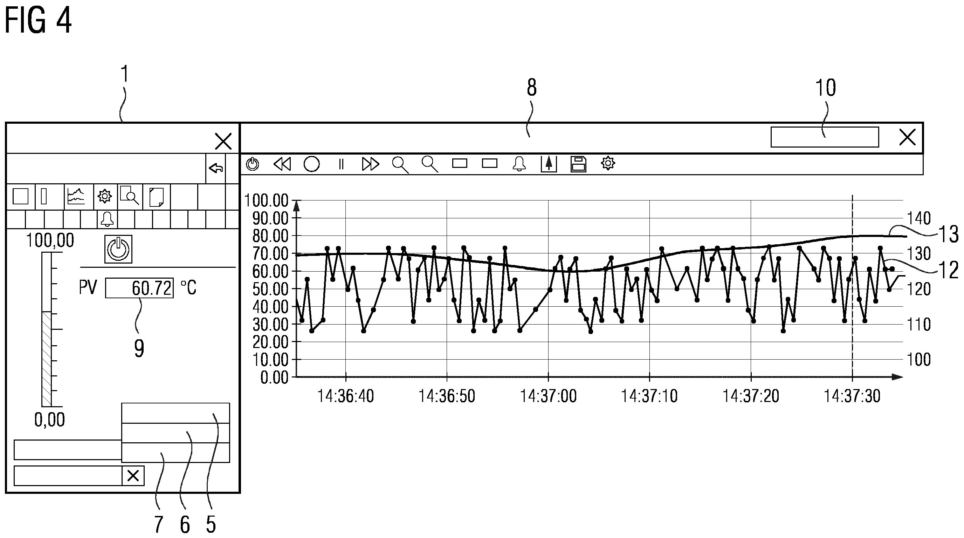

Wählt der Operator eine der weiteren grafischen Repräsentationen A, B, C aus, wird diese in die weitere grafische Repräsentation 8 integriert. In dem vorliegenden Ausführungsbeispiel wird ein zweiter zeitlicher Verlauf 13 eines weiteren Prozessmesswertes zusammen mit dem (ersten) zeitlichen Verlauf 12 des (ersten) Prozessmesswertes innerhalb der weiteren grafischen Repräsentation 8 visuell dargestellt, was anhand von FIG 4 veranschaulicht ist.

In FIG 5 ist ein Leitsystem 14 für die Bedienung und Beobachtung der als Prozessanlage ausgebildeten technischen Anlage schematisch dargestellt. Das Leitsystem 14 umfasst einen Operator Station Server 15 und einen Operator Station Client 16. Der Operator Station Server 15 und der Operator Station Client 16 sind über einen Terminalbus 17 miteinander und optional mit nicht dargestellten weiteren Komponenten des Leitsystems 14 wie einem Archivserver oder einem Engineering Station Server verbunden.

Ein Benutzer bzw. Operator kann zum Zwecke des Bedienens und Beobachtens über den Operator Station Client 16 mittels des Terminalbus 17 auf den Operator Station Server 15 zugreifen. Der Terminalbus 17 kann, ohne sich darauf zu beschränken, beispielsweise als Industrial Ethernet ausgebildet sein.

Der Operator Station Server 15 weist eine Geräteschnittstelle 18 auf, die mit einem Anlagenbus 19 verbunden ist. Über diese Geräteschnittstelle 19 ist der Operator Station Server 15 mit einem Automatisierungsgerät 20 sowie mit weiteren Komponenten der verfahrenstechnischen Anlage wie Peripheriegeräten 21, 22 verbunden und kann mit diesen kommunizieren. Der Anlagenbus 19 kann, ohne sich darauf zu beschränken, beispielsweise als Industrial Ethernet ausgebildet sein.

Auf dem Operator Station Server 15 sind (unter anderem) ein Visualisierungsdienst 23, ein Prozessabbild 24 und ein Konfigurationsspeicher 25 implementiert. Der in dem Operator Station Server 15 integrierte Visualisierungsdienst 23 initiiert eine Übertragung von Visualisierungsinformationen an den Operator Station Client 16. Der Operator Station Client 16 ist dazu ausgebildet, eine Visualisierung, d.h. eine grafische Darbietung, insbesondere von grafischen Repräsentationen technischer Objekte, zum Bedienen und Beobachten der Prozessanlage darzustellen.

In dem Prozessabbild 24 des Operator Station Servers 15 ist eine Momentaufnahme der (Signal-)Zustände von mit dem Operator Station Server 15 verbundenen Geräten und/oder Applikationen hinterlegt. Ein Verlaufsdiagrammdienst 26 des Visualisierungsdienstes 23 erzeugt, unter Einbezug aktueller Prozessmesswerte aus dem Prozessabbild 24, einen zeitlichen Verlauf 12, 13 eines Prozessmesswertes (genauer: Visualisierungsinformationen, die zur Erzeugung des zeitlichen Verlaufs 12, 13 von dem Operator Station Client 16 nutzbar sind), welcher zur visuellen Darstellung an den Operator Station Client 16 übertragen wird. Ein Meldeanzeigedienst 27 erzeugt eine Meldeanzeige, welche analog an den Operator Station Client 16 zur visuellen Darstellung übertragen wird. Dabei überwacht der Meldeanzeigedienst 27 das Prozessabbild 24 des Operator Station Servers 15. Ein Repräsentationsdienst 28 erzeugt die grafischen Repräsentationen 1, 2, 3, 4 und die weiteren grafischen Repräsentationen 8, A. B, C.

Der Operator kann nun die zuvor erläuterte Anforderungen vornehmen und sich mehrere weitere grafische Repräsentationen ineinander, d.h. gemeinsam, visuell darstellen lassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (14) für eine technische Anlage, insbesondere Fertigungs- oder Prozessanlage, das wenigstens einen Operator Station Server (15) und wenigstens einen mit dem Operator Station Server (15) verbundenen Operator Station Client (16) umfasst, wobei der Operator Station Server (15) dazu ausgebildet ist, Visualisierungsinformationen an den Operator Station Client (16) zu übertragen,
und wobei der Operator Station Client (16) dazu ausgebildet ist, mittels der Visualisierungsinformationen eine grafische Darbietung für einen Operator der technischen Anlage zu erzeugen,
wobei der Operator Station Server (15) und der Operator Station Client (16) dazu ausgebildet sind, zur Laufzeit der technischen Anlage eine erste grafische Repräsentation (1) eines ersten technischen Objektes und eine zweite grafische Repräsentation (2) eines zweiten technischen Objektes der technischen Anlage zum Bedienen und Beobachten der technischen Objekte visuell darzustellen,
und wobei der Operator Station Server (15) und der Operator Station Client (16) dazu ausgebildet sind, eine weitere grafische Repräsentation (8) des ersten technischen Objektes und eine weitere grafische Repräsentation (A, B, C) des zweiten technischen Objektes auf eine jeweilige Anforderung eines Operators des Leitsystems (14) an den Operator Station Client (16) hin visuell darzustellen, wobei die Anforderung durch eine sprachliche oder textliche Eingabe des Operators und/oder durch ein Anwählen eines Anforderungssymbols (9) in der ersten grafischen Repräsentation (1) und der zweiten grafischen Repräsentation (2) durch den Operator stellbar ist,
**dadurch gekennzeichnet, dass**
der Operator Station Server (15) und der Operator Station Client (16) dazu ausgebildet sind, im Zusammenhang mit der weiteren grafischen Repräsentation (8, A, B, C) ein weiteres Anforderungssymbol (10) in der weiteren grafischen Repräsentation (8) des ersten technischen Objekts und/oder des zweiten technischen Objekts bereitzustellen, und bei dem Anwählen des weiteren Anforderungssymbols (10) durch den Operator des Leitsystems (14) die weitere grafische Repräsentation (A, B, c), die einem der technischen Objekte zugeordnet ist, in die weitere grafische Repräsentation (8), die dem anderen der technischen Objekte zugeordnet ist, zu integrieren.

2. Leitsystem (14) für eine technische Anlage, insbesondere Fertigungs- oder Prozessanlage, das wenigstens einen Operator Station Server (15) und wenigstens einen mit dem Operator Station Server (15) verbundenen Operator Station Client (16) umfasst, wobei der Operator Station Server (15) dazu ausgebildet ist, Visualisierungsinformationen an den Operator Station Client (16) zu übertragen,
und wobei der Operator Station Client (16) dazu ausgebildet ist, mittels der Visualisierungsinformationen eine grafische Darbietung für einen Operator der technischen Anlage zu erzeugen,
wobei der Operator Station Server (15) und der Operator Station Client (16) dazu ausgebildet sind, zur Laufzeit der technischen Anlage eine erste grafische Repräsentation (1) eines ersten technischen Objektes und eine zweite grafische Repräsentation (2) eines zweiten technischen Objektes der technischen Anlage zum Bedienen und Beobachten der technischen Objekte visuell darzustellen,
und wobei der Operator Station Server (15) und der Operator Station Client (16) dazu ausgebildet sind, eine weitere grafische Repräsentation (8) des ersten technischen Objektes und eine weitere grafische Repräsentation (A, B, C) des zweiten technischen Objektes auf eine jeweilige Anforderung eines Operators des Leitsystems (14) an den Operator Station Client (16) hin visuell darzustellen, wobei die Anforderung durch eine sprachliche oder textliche Eingabe des Operators und/oder durch ein Anwählen eines Anforderungssymbols (9) in der ersten grafischen Repräsentation (1) und der zweiten grafischen Repräsentation (2) durch den Operator stellbar ist,
**dadurch gekennzeichnet, dass**
der Operator Station Server (15) und der Operator Station Client (16) dazu ausgebildet sind, im Zusammenhang mit der visuellen Darbietung der weiteren grafischen Repräsentation (8) des ersten technischen Objektes auf eine sprachliche oder textliche Eingabe des Operators hin die weitere grafische Repräsentation (A, B, C), die einem der technischen Objekte zugeordnet ist, in die weitere grafische Repräsentation (8), die dem anderen der technischen Objekte zugeordnet ist, zu integrieren.

3. Leitsystem (14) nach Anspruch 1 oder 2, bei dem der Operator mithilfe der jeweiligen grafischen Repräsentation (1, 2, 3, 4) das dazugehörige technische Objekt zur Laufzeit der technischen Anlage bedienen und beobachten kann.

4. Leitsystem (14) nach einem der vorangegangenen Ansprüche, bei dem es sich bei den technischen Objekten um Prozessobjekte einer Prozessanlage handelt.

5. Leitsystem (14) nach einem der vorangegangenen Ansprüche, bei dem die technischen Objekte zur Laufzeit der technischen Anlage zusammenwirkend verbunden sind, insbesondere verfahrenstechnisch zusammenwirkend.

6. Leitsystem (14) nach einem der vorangegangenen Ansprüche, bei dem die erste grafische Repräsentation (1) des ersten technischen Objektes und/oder die erste grafische Repräsentation (2, 3, 4) des zweiten technischen Objektes ein Sprungsymbol (5, 6, 7) aufweisen, bei dessen Anwählen durch den Operator des Leitsystems (14) die jeweils andere erste grafische Repräsentation (1, 2, 3, 4) des jeweils anderen, dazugehörigen technischen Objektes visuell dargestellt wird.

7. Leitsystem (14) nach einem der vorangegangenen Ansprüche, bei dem die weiteren grafischen Repräsentationen (8, A, B, C) zeitliche Verläufe (12, 13) von Messwerten, Meldungen, insbesondere Alarmmeldungen, oder Statusinformationen der dazugehörigen technischen Objekte darstellen.

8. Leitsystem (14) nach einem der vorangegangenen Ansprüche, das dazu ausgebildet ist, die zur visuellen Darstellung der weiteren grafischen Repräsentationen (8, A, B, C) notwendigen Informationen erst dann zu ermitteln, wenn der Operator die Anforderung an das Leitsystem (14) durch ein Anwählen des Anforderungssymbols oder durch eine sprachliche oder textliche Eingabe stellt.

9. Verwendung eines Leitsystems (14), das gemäß einem der Ansprüche 1 bis 8 ausgebildet ist, zum Betrieb einer technischen Anlage, insbesondere Fertigungs- oder Prozessanlage.

10. Verwendung gemäß Anspruch 9, bei dem ein Operator mithilfe der grafischen Repräsentation (1, 2, 3, 4) das dazugehörige technische Objekt zur Laufzeit der technischen Anlage bedient und beobachtet.

11. Verwendung gemäß Anspruch 9 oder 10, bei dem es sich bei den technischen Objekten um Prozessobjekte einer Prozessanlage handelt.

12. Verwendung gemäß einem der Ansprüche 9 bis 11, bei dem die technischen Objekte zur Laufzeit der technischen Anlage zusammenwirkend verbunden sind, insbesondere verfahrenstechnisch zusammenwirkend.

13. Verwendung gemäß einem der Ansprüche 9 bis 12, bei dem die erste grafische Repräsentation (1) des ersten technischen Objektes und/oder die erste grafische Repräsentation (2) des zweiten technischen Objektes ein Sprungsymbol (5, 6, 7) aufweisen, bei dessen Anwählen durch den Operator des Leitsystems (14) die jeweils andere erste grafische Repräsentation (1, 2) des jeweils anderen, dazugehörigen technischen Objektes visuell dargestellt wird.

14. Verwendung gemäß einem der Ansprüche 9 bis 13, bei dem die weiteren grafischen Repräsentationen (8, A, B, C) zeitliche Verläufe (12, 13) von Messwerten, Meldungen, insbesondere Alarmmeldungen, oder Statusinformationen der dazugehörigen technischen Objekte darstellen.

15. Verwendung gemäß einem der Ansprüche 9 bis 14, bei dem das Leitsystem (14) die zur visuellen Darstellung der weiteren grafischen Repräsentationen (8, A, B, C) notwendigen Informationen erst dann ermittelt, wenn der Operator die Anforderung an das Leitsystem (14) durch ein Anwählen des Anforderungssymbols, oder durch eine sprachliche oder eine textliche Eingabe stellt.
